# EUROPEAN PATENT APPLICATION

(11) **EP 4 603 387 A1**
(43) Date of publication of application: **20.08.2025**
(21) Application number: 24157692.5
(22) Date of filing: 14.02.2024
(51) Int. Cl.: B64D 11/06

(54) **UNIVERSAL AIRCRAFT PASSENGER SEAT PLATFORM AND SYSTEM, AND METHOD OF INSTALLING AN AIRCRAFT PASSENGER SEAT SYSTEM**

(71) Applicant: Airbus Operations GmbH, 21129 Hamburg (DE)
(72) Inventor: Fritz, Markus, Hamburg (DE)
(74) Representative: Schornack, Oliver

(57) **Abstract**

The present disclosure relates to an aircraft passenger seat platform (110) having a main body (111), and a plurality of body mounts (113, 114) arranged at a bottom and/or side of the main body, wherein at least some of the plurality of body mounts (113, 114) are adjustable in at least one direction along the bottom and/or side of the main body (111). Such universal passenger seat platform can be adapted to any arrangement of seat rails in an aircraft. Furthermore, the platform comprises a seat receptacle arranged at a top of the main body and configured to receive and hold one or more passenger seatings (121) and/or one or more passenger seat backrests (122). Further disclosed are an associated aircraft passenger seat system, an aircraft having such platform and/or system, as well as a method of installing an aircraft passenger seat system.

## Description

The present disclosure generally relates to a universal passenger seat platform for an aircraft, an aircraft passenger seat system and method of installing the same in an aircraft. Particularly, the present disclosure relates to universal passenger seat platform mountable to a floor and/or side of an aircraft and having a receptacle at a top to receive and hold one or more passenger seatings and/or back rests.

A conventional aircraft passenger seat comprises a load bearing structure adapted to a particular aircraft type, particularly adapted to the location of seat rails in the aircraft type onto/into which the load bearing structure is mounted.

Moreover, aircraft operators, such as airlines, usually prefer to have dedicated seats. Each of these seats has to be certified, often particularly with respect to an aircraft type, which requires a great effort before such dedicated seats can be installed in a particular aircraft.

Thus, a large amount of seats has to be produced, certified and stored, in order to cover all combinations of aircraft types and dedicated seats. This problem is even increased in view of different seats for different cabin classes, such as economy class, business class, first class, or the like.

It is therefore an object of the present disclosure to overcome the above problems.

This object is solved by the present invention as defined in the independent claims. Preferred embodiments are defined by the dependent claims.

According to a first aspect to better understand the present disclosure, an aircraft passenger seat platform comprises a main body, a plurality of body mounts arranged at a bottom and/or side of the main body, a seat receptacle arranged at a top of the main body and configured to receive and hold one or more passenger seatings and/or one or more passenger seat backrests, and an electrical interface. At least some of the plurality of body mounts are adjustable in at least one direction along the bottom and/or side of the main body.

The aircraft passenger seat platform can be installed in any type of aircraft, i.e., independent of the location and relative position of the seat rails in a cabin floor and/or the seat rails at a side of the cabin, such as a lateral side and/or sidewall/lining of the cabin. Thus, there is no requirement for a different type of seat for each seat rail configuration. Moreover, the seat platform can be considered as a universal seat platform allowing, on the one hand, installation of the platform in any type of aircraft, and on the other hand, installation of any type of seat on top of the platform. This significantly reduces the number of parts to be certified for the aircrafts, particularly down to one part, namely the platform.

As a mere example, the aircraft passenger seat platform can have a height corresponding to a standard height of the bottom of a seating. A seating refers to a seat cushion (a foam or the like including the actual seat surface), and any structural parts to hold and form the seating. Since aircraft seats are usually designed for an average sized person, the height or horizontal level (or range of heights) of the seating above the cabin floor is standardised. The aircraft passenger seat platform can, likewise, be standardised by having the top of its main body at a particular height or horizontal level above the cabin floor.

Furthermore, during final assembly of an aircraft the aircraft passenger seat platform can already be installed in the passenger cabin, while the seating(s) and/or seat backrest(s) can be provided later, e.g., shortly before delivery to the aircraft operator. This facilitates standardising assembly of an aircraft, for instance, independent of the aircraft operator.

In an implementation variant, the seat receptacle can comprise a plurality of seat receptacles arranged in a grid pattern at the top of the main body. The plurality of seat receptacles may be provided in a manner that different types of seats (seating and seat backrest) can be mounted on the main body. As a mere example, a number of the seat receptacles may be larger than the number of seat receptacles required to mount one type of seat. In other words, the seat receptacles arranged in a grid pattern allow mounting a passenger seat of any type and size in a secure manner to a subgroup of the seat receptacles. The passenger seats are configured to have holders or seat mounts in a pattern corresponding to the subgroup of the seat receptacles, i.e., any spatial configuration of holders or seat mounts at a passenger seat matches with the location of some of the seat receptacles.

Moreover, such number of seat receptacles further allows positioning the passenger seat at different locations on top of the platform, particularly at different locations in a (substantially) horizontal plane at the top of main body. Thus, a spatial independence of the passenger seat can be achieved by the number of seat receptacles, particularly with an increasing number of seat receptacles.

In another implementation variant, the seat receptacle can comprise one or more seat mounting rails extending along a transverse direction or longitudinal direction of a plane defined by the top of the main body. Thus, a passenger seat can be mounted or connected to the main body at the one or more seat mounting rails. Due to the extension of each mounting rail, any type of passenger seat can be installed, i.e., any spatial configuration of holders or seat mounts at a passenger seat fits into the seat mounting rails. As a mere example, due to the longitudinal extension of the seat mounting rail, a distance between seat mounts of the passenger seat in this longitudinal direction of the seat mounting rail is irrelevant, as any seat mounts of any distance will be covered by the seat mounting rail. Likewise, the passenger seat can be adjusted spatially along the seat mounting rails.

In case of a plurality of seat mounting rails, a distance between two seat mounting rails (provided, for example, parallel to one another) can be chosen to correspond to a distance of holders or seat mounts of a particular passenger seat. In order to allow any type of passenger seat to be installed, more than two seat mounting rails can be provided on the main body, so that for any distance of holders or seat mounts (of different types of passenger seats) there is at least one pair of seat mounting rails in the main body.

In any case, a high flexibility of installing a passenger seat of any type on the platform is provided. In addition, in case of seat mounting rails, the position of the passenger seat can be adjusted along the longitudinal direction of the seat mounting rails.

In a further implementation variant, the electrical interface can be provided at the top of the main body. This facilitates connecting the passenger seat to the electric interface, as it is not on a floor level as in conventional aircrafts, but at the level of the seating of the passenger seat. Alternatively or additionally, the electrical interface can be provided at the side of the main body close to or facing a (lateral) side of the aircraft cabin, such as a sidewall or lining.

As a mere example, the electric interface can include an electric power supply (e.g., for IFE, massage, heating devices and the like in the seat) as well as a data connection for any entertainment system, lighting, and the like provided with or at the passenger seat.

In yet a further implementation variant, the main body can have a box-like shape, with an opening at one lateral side. Specifically, the opening can be arranged, when the passenger seat platform is installed in an aircraft, to face rearwards. This allows a passenger sitting in a seat arranged behind the passenger seat platform to use the space inside the box-shaped main body, for example, as a foot resting space or to securely store hand luggage.

According to a second aspect to better understand the present disclosure, an aircraft passenger seat system comprises one or more aircraft passenger seat platforms of the first aspect or one or more of its variants.

The aircraft further comprises one or more passenger seatings mounted to a seat receptacle of the aircraft passenger seat platform, and one or more passenger seat backrests mounted to a seat receptacle of the aircraft passenger seat platform. It is to be understood that the one or more passenger seat backrests correspond in number to the one or more passenger seatings.

Alternatively or additionally, instead of separate seating(s) and seat backrest(s) one or more complete passenger seats, each having a seating and a seat backrest, can be mounted to a seat receptacle of the aircraft passenger seat platform. Thus, the passenger seat can form a unit consisting of at least a seating and a seat backrest.

According to a third aspect to better understand the present disclosure, a method of installing an aircraft passenger seat system in an aircraft comprises the following steps. Firstly, one or more aircraft passenger seat platforms of the first aspect or one or more of its variants is/are provided. Thereafter, the plurality of body mounts of the one or more aircraft passenger seat platforms are adjusted to correspond to a plurality of seat rails of the aircraft. As a mere example, the plurality of body mounts can be adjusted to have a particular distance corresponding to the distance between two seat rails. The seat rails can be arranged/positioned at a floor and/or a lateral side of the passenger cabin.

Then, the one or more aircraft passenger seat platforms are mounted to the plurality of seat rails, and further one or more passenger seats are mounted to the seat receptacles at the top of the main body of the aircraft passenger seat platform.

This allows a separation of the installation of the platform and the passenger seat, including a timely separation as well as a spatial separation. For instance, while the platform can be installed in the aircraft during final assembly of the aircraft, the actual passenger seat(s) can be provided later and/or at a different assembling location.

In addition, separating the installation of the platform from the installation of the passenger seat allows lighter components to be installed compared to conventional passenger seats including their load-bearing structures. As a mere example, the individual components of the aircraft passenger seat system can be designed to have a weight below a maximum allowed weight for workers to carry, such as 25 kg or 30 kg.

In an implementation variant, the mounting of one or more passenger seats can comprise mounting one or more passenger seatings to the seat receptacles, and mounting one or more passenger seat backrests to the seat receptacles. Thus, while the passenger seat can be provided as a single unit and be mounted to the platform as a single unit, the seating and seat backrest can also be separate components, which facilitates handling and installation.

In another implementation variant, the method can further comprise dismounting the one or more passenger seats from the aircraft passenger seat platform, wherein the one or more passenger seats are of a first type. Thereafter, the method can further comprise mounting one or more passenger seats of a second type to the seat receptacles, wherein the second type is different from the first type. Thus, the type of passenger seat can be changed in an easy and fast manner. As a mere example, a certain type of passenger seat can be stored in a cargo area of the aircraft to replace it with another type, or can be kept at an airport to be installed in another aircraft (of same or different type, brand or operator).

In an implementation variant, the first type of passenger seat is an economy class passenger seat, and the second type is a business class passenger seat or a stretcher for transporting a lying person. The latter may including installation on one or more platforms. Thus, on a regular flight, the type of passenger seat can be changed during turnover time by simply removing the passenger seat from the platform and storing of the same in a cargo area of the aircraft, while the second type of passenger seat can be brought from the cargo area of the aircraft and be installed in the passenger cabin.

Alternatively or additionally, instead of installing a passenger seat or stretcher, one or more platforms can be used to install a cargo box or other transport device in the passenger cabin.

In yet another implementation variant, the method can further comprise connecting an electric and/or electronic line of the passenger seat to the electric interface of the aircraft passenger seat platform. For example, the electric interface can be provided at the top of the main body of the platform. The electric connection can be established in an easy manner, since the electric interface is adjacent to the bottom of the passenger seat and at a vertical level (height) that is easy to reach for any worker.

In an implementation variant, the connecting to the electrical interface can include connecting an electric and/or electronic line arranged at a location of the passenger seat matching a location of the electric interface of the aircraft passenger seat platform. In other words, when installing the passenger seat, the two connecting (electrical/electronic) elements at the seat and the platform are arranged to be connected while mounting the seat onto the platform. This allows a "plug & play" solutions. As a mere example, the seat receptacles at the platform and the corresponding holder or seat mount can be equipped with plug and socket, in order to electrically connect the seat when mounting the seat to the receptacle.

According to a fourth aspect to better understand the present disclosure, an aircraft comprises a plurality of aircraft passenger seat platforms of the first aspect or one or more of its variants, or a plurality of aircraft passenger seat systems of the second aspect.

The present disclosure is not restricted to the aspects and variants in the described form and order. Specifically, the description of aspects and variants is not to be understood as a specific limiting grouping of features. It is to be understood that the present disclosure also covers combinations of the described aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a front view of an aircraft passenger seat system with a first seat configuration;
- Figure 2: schematically illustrates a front view of an aircraft passenger seat system with a second seat configuration;
- Figure 3: schematically illustrates a top view of an exemplary aircraft passenger seat platform;
- Figure 4: schematically illustrates an aircraft comprising seat rails and a plurality of aircraft passenger seat platforms;
- Figures 5 and 6: schematically illustrate exemplary aircraft passenger seat systems with different platform configurations; and
- Figure 7: schematically illustrates a flow diagram of a method of installing an aircraft passenger seat system.

In the following description, for purposes of explanation and not limitation, specific details are set forth in order to provide a thorough understanding of the present disclosure. It will be apparent to one skilled in the art that the present disclosure may be practiced in other implementations that depart from these specific details.

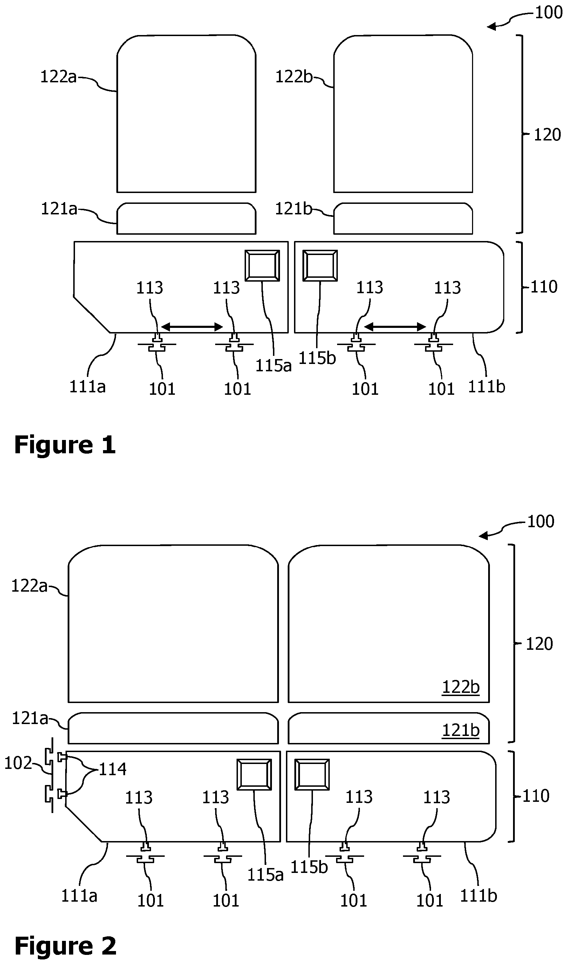

Figure 1 schematically illustrates a front view of an aircraft passenger seat system 100 with a first seat configuration. The aircraft passenger seat system 100 comprises one or more aircraft passenger seat platforms 110 and one or more passenger seats 120 mounted to one of the aircraft passenger seat platforms 110.

The aircraft passenger seat platform 110 comprises a main body 111 having a plurality of body mounts 113 arranged at a bottom thereof. Each body mount 113 is configured to be mounted to a seat rail 101 or similar structure allowing a mechanical connection to a body mount 113. As a mere example, a plurality of seat rails 101 can be provided in a passenger cabin floor and extend in a longitudinal direction of the passenger cabin.

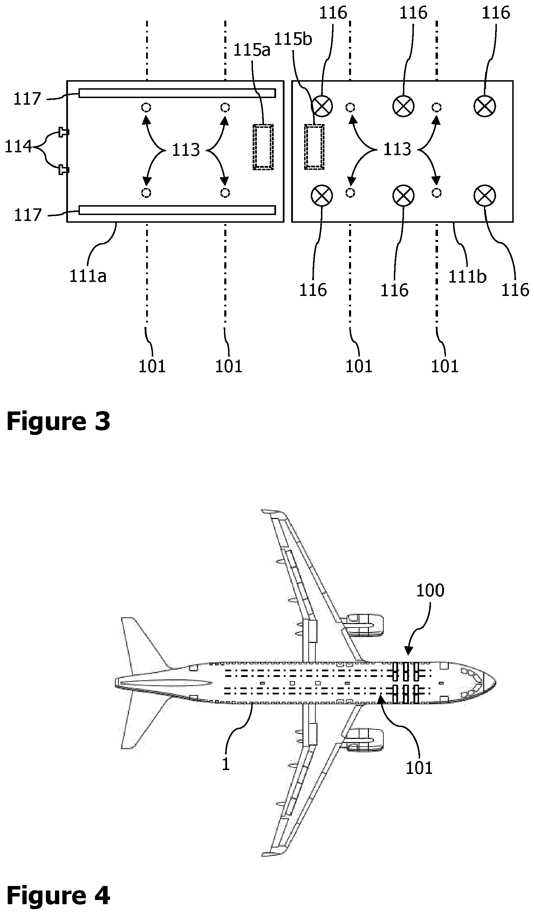

Figure 4 exemplarily illustrates an aircraft 1 having a plurality of seat rails extending in a longitudinal direction of the aircraft 1. Figure 4 shows four seat rails in total, for example, one pair of seat rails arranged on each side of a centre aisle of the aircraft 1. As a mere example, six platforms 110 are illustrated in the aircraft 1 of Figure 4, i.e. three platforms 110 on each side of the aircraft 1. While the remaining part of the aircraft 1 is not (yet) equipped with seat platforms 110.

Turning back to Figure 1, at least some of the body mounts 113 are adjustable in at least one direction along the bottom of the main body 111. This is schematically illustrated by double arrows in the transverse direction (width direction of the main bodies 111). Thus, the platform 110 can be mounted to seat rails 101 of any distance, i.e. to seat rails 101 provided in any type of aircraft 1. For instance, the distance in transverse direction between two seat rails 101 can vary depending on the type of aircraft 1. The platform 110 can be installed in any type of aircraft 1, due to the adjustability of the body mounts 113. Thus, the platform 110 forms a universal seat base applicable to all types of aircrafts 1.

Moreover, the aircraft passenger seat platform 110 as illustrated exemplarily comprises two main bodies 111a, 111b arranged adjacent to one another in a transverse direction of the aircraft 1, i.e. in a direction orthogonal to the longitudinal direction of the seat rails 101. The platform 110 can comprise more or less main bodies 111, depending on the required width of the platform 110, for example, depending on the required number of passenger seats 120 to be mounted.

It is to be understood that the number of seat rails 101 and body mounts 113 can be more or less per main body 111 than illustrated. Specifically, if only one main body 111 is installed, at least two body mounts 113 mounted to at least two seat rails 101 allow a statically secure mounting of the platform 110. If two adjacent main bodies 111a, 111b are provided, each main body 111 can be mounted to a single seat rail 101, while additional stability can be achieved by connecting the two main bodies 111 to one another, for example, at lateral sides facing one another. It is to be understood that the gap illustrated between the main bodies 111 is for illustrative purposes only.

Furthermore, according to an additional or alternative variant illustrated in Figure 2 (not in Figure 1 for sale of clarity), all or some of the body mounts 114 can be arranged in a lateral region of the platform 110, where the platform 110 can be mounted to corresponding seat rails 102 provided in a sidewall of the aircraft cabin. It is to be understood that the body mounts 114 at the side of the main body 111 are likewise adjustable in at least one direction along the side of the main body 111. For instance, the body mounts 114 may be adjustable/movable in the vertical direction (height direction of the main bodies 111). Thus, the platform 110 can be mounted to seat rails 101, 102 of any distance, i.e. to seat rails 101, 102 provided in any type of aircraft 1. For instance, the distance in vertical direction between two seat rails 102 can vary depending on the type of aircraft 1. The platform 110 can be installed in any type of aircraft 1, due to the adjustability of the body mounts 114. Thus, the platform 110 still forms a universal seat base applicable to all types of aircrafts 1.

The aircraft passenger seat platform 110 further comprises an electrical interface 115. For instance, one electrical interface 115a, 115b can be provided with each main body 111. The electrical interface 115 allows electric power supply as well as a data connection with the general power and data network (not illustrated) of the aircraft 1. The electrical interface 115 can be provided in a top region of the main body 111, so that it is reachable in an easy manner after mounting the main body 111 to the seat rail(s) 101, for example, when installing the passenger seat(s) 120.

Alternatively, the electrical interface 115a, 115b can be provided at or with a seat receptacle 116, 117 (not illustrated). This allows connecting the seat with the electrical interface 116, 117 at the same time when mounting the seat 120 to the platform 110 in a plug&play fashion. As a mere example, a holder or seat mount of the seat 120 can include an electrical plug or socket matching a socket or plug forming the electrical interface 116, 117.

Figure 3 schematically illustrates a top view of an exemplary aircraft passenger seat platform 110. As can be derived from this drawing, the aircraft passenger seat platform 110 comprises a seat receptacle 116, 117 arranged at a top (region) of the main body 111. Each seat receptacle 116, 117 is configured to receive and hold one or more passenger seatings 121 (Figure 1) and/or one or more passenger seat backrests 122 (also Figure 1).

Figure 3 schematically illustrates two exemplary types of seat receptacles. To the left in Figure 3, the main body 111a comprises one or more seat mounting rails 117 extending along a transverse direction of a plane defined by the top of the main body 111. It is to be understood that the one or more seat mounting rails 117 can also extend along a longitudinal direction of the plane defined by the top of the main body 111, and/or that seat mounting rails 117 can be provided that extend in both, transverse and longitudinal direction, and/or that seat mounting rails 117 can be provided that extend diagonally to the transverse direction (not illustrated).

To the right in Figure 3 the main body 111b comprises a plurality of seat receptacles 116 arranged in a grid pattern at the top of the main body 111. The grid pattern allows receiving holders or seat mounts (not illustrated) provided at a passenger seat 120 in a grid that matches the position of at least some of the seat receptacles 116. Thus, not all seat receptacles 116 may be used when mounting the passenger seat 120, but all seat receptacles 116 allow mounting any type of passenger seat 120 (i.e., allowing mounting all variants of locations/grids of holders or seat mounts of all types of passenger seats 120).

It is to be understood that the locations of seat receptacles 116, 117 as illustrated in Figure 3 are exemplary and for illustrative purposes only. Thus, seat receptacles 116, 117 can be provided anywhere at the top of the main body 111, and/or can also be provided at lateral sides of the main body 111.

Furthermore, the platform 110 can be equipped only with seat mounting rails 117 or only with point-like seat receptacles 116. Likewise, all platforms 110 in an aircraft 1 can be equipped with only seat mounting rails 117 or seat receptacles 116.

Alternatively, depending on the required flexibility, a mix of seat mounting rails 117 and seat receptacles 116 can be provided throughout an aircraft 1 or even within one platform 110. It is also possible to provide seat mounting rails 117 and seat receptacles 116 on one (single) main body 111, to increase flexibility and adaptability to any type of passenger seat 120.

Turning back to Figure 1, the aircraft passenger seat system 100 with the aircraft passenger seat platform 110 further comprises two seatings 121 and two seat backrests 122 mounted to a seat receptacle 116, 117 of the aircraft passenger seat platform 110. The actual holders or seat mounts and seat receptacles 116, 117 are not illustrated in Figure 1 for sake of clarity. It is to be understood that one seating 121a and one seat backrest 122a form a passenger seat 120. Such passenger seat 120 can be mounted to the top of the main body 111 as a single unit. Alternatively, the seating 121 and the seat backrest 122 are mounted individually to the main body 111 (i.e., to the platform 110).

Figure 2 schematically illustrates a front view of an aircraft passenger seat system 100 with a second seat configuration. As can be derived from a comparison of Figures 1 and 2, the passenger seats 120a, 120b (i.e., seating 121a with backrest 122a and seating 121b with backrest 122b) in the configuration of Figure 2 are of larger width than those of the configuration of Figure 1. Thus, the passenger seats 120a, 120b are of different types, such as a first type and a second type. Such first type can be an economy class passenger seat or premium economy class passenger seat, while the second type can be a business class passenger seat or a first class passenger seat.

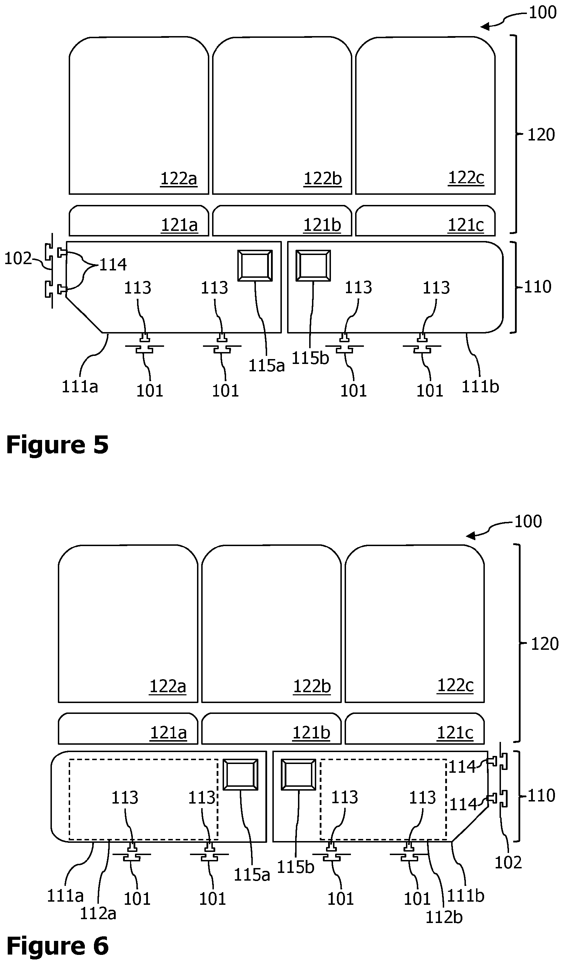

Figures 5 and 6 schematically illustrate exemplary aircraft passenger seat systems 100 with different platform configurations, and with different seat configurations compared to Figures 1 and 2. Specifically, the platform 110 of Figure 5 is equipped with three passenger seats 120a, 120b, 120c (e.g., each consisting of a seating 121a,b,c and a backrest 122a,b,c). As can be derived from a comparison of Figure 5 with Figures 1 and 2 a middle passenger seat 120b can be mounted to two adjacent main bodies 111a, 111b. Thus, the middle passenger seat 120b can be mounted to seat receptacles 116, 117 provided on the left main body 111a as well as to seat receptacles 116, 117 provided on the right main body 111b. Therefore, the platform 110 is universal also with respect to the number of passenger seats 120 to be mounted thereto.

Figure 6 schematically illustrates a similar aircraft passenger seat system 100 as in Figure 5, particularly a system 100 having the same seat configuration as in Figure 5.

However, while the left main body 111a of Figure 5 is configured to fit to the righthand side of the aircraft 1, it is the right main body 111b of Figure 6 that is configured to fit to the left-hand side of the aircraft 1. Specifically, due to the round cross-sectional shape of the aircraft 1, in a region where a cabin floor intersects with a sidewall of the fuselage of the aircraft 1 the platform 110 can be adapted to the shape of the floor and sidewall. As is well known in the art, in this region a so-called dado panel will be arranged, to which the corresponding (adjacent) main body 111 can be adapted, particularly in its cross-sectional shape.

According to another option, if seat rails 102 are provided at the sidewall of the aircraft 1, the main body 111 adapted to the side or dado panel can be equipped with (adjustable) holders or seat mounts 114 allowing mounting of the platform 110 to the lateral seat rails 102.

Nevertheless, the number of different types (or shapes) of main bodies 111 can be kept to a minimum. As can be derived from Figures 1 to 6, only two different types of main bodies 111 are necessary for the aircraft passenger seat system 100. It is further to be understood that the above-described adaptation of one of the main bodies 111 to a dado panel region can be omitted and only one (single) type of main body 111 is required for all aircraft passenger seat systems 100.

Figure 6 schematically illustrates another exemplary feature of the platform 110, which is not illustrated in Figures 1 to 5 for clarity reasons. Specifically, each platform 110, particularly main body 111, can comprise an opening 112. When the platform 110 is installed in the aircraft 1, such opening 112 can face rearwards in the longitudinal direction of the aircraft 1. Thus, the interior space in the main body 111 can be used by a passenger sitting behind the main body 111, such as for storage of hand luggage or as a foot rest place.

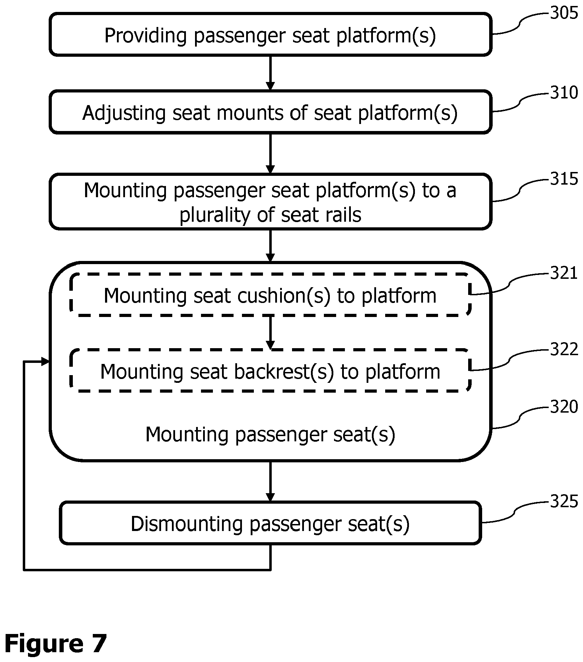

Figure 7 schematically illustrates a flow diagram of a method of installing an aircraft passenger seat system 100, particularly in an aircraft 1. In a first step 305, one or more aircraft passenger seat platforms 110 are provided. These platforms 110 can be any of those illustrated and described with respect to Figures 1 to 6.

In step 310 the plurality of body mounts 113, 114 of the provided aircraft passenger seat platforms 110 are adjusted. Specifically, a position/location of each of the body mounts 113, 114 of the platform 100 is adjusted to correspond to one or more seat rails 101, 102. Thus, each body mount 113, 114 can be placed on/in a seat rail 101, 102, and in step 315, the body mounts 113 can be mounted to the seat rail(s) 101, 102.

Thereafter, in step 320, one or more passenger seats 120 are mounted to the seat receptacles 116, 117 at the top of the main body/bodies 111 of the aircraft passenger seat platform 110. This mounting step 320 can be performed at a different time and/or location compared to the mounting step 315. Thus, mounting of the platform 110 can be independent of the mounting of the passenger seat 120.

While the passenger seat(s) 120 can be mounted as a single unit to the platform 110, seating(s) 121 and seat backrest(s) 122 can be mounted individually in respective mounting step 321 and 322.

As a mere example, a passenger seat 120 may require replacement, for example, due to wear and/or due to a different cabin configuration. Thus, in step 325 the one or more passenger seats 120 (of a first type) can be dismounted from the aircraft passenger seat platform 110.

The method can then proceed back to step 320, where one or more passenger seats 120 are mounted to the seat receptacles 116, 117 of the platform 110, wherein the now mounted passenger seats 120 are of a second type being different from the first type. For instance, passenger seats 120 can be changed from an economy class seat (Figure 1) to a business class seat (Figure 2). Likewise, the number of passenger seats 120 can be changed by dismounting (step 325) a first number of passenger seats 120 from a platform 110 and mounting (step 320) a second (different) number of passenger seats 120 to this platform 110.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. An aircraft passenger seat platform (110), comprising:
a main body (111);
a plurality of body mounts (113, 114) arranged at a bottom and/or side of the main body (111);
a seat receptacle (116, 117) arranged at a top of the main body (111) and configured to receive and hold one or more passenger seatings (121) and/or one or more passenger seat backrests (122); and
an electrical interface (115),
wherein at least some of the plurality of body mounts (113, 114) are adjustable in at least one direction along the bottom and/or side of the main body (111).

2. The aircraft passenger seat platform (110) of claim 1, wherein the seat receptacle comprises a plurality of seat receptacles (116) arranged in a grid pattern at the top of the main body (111).

3. The aircraft passenger seat platform (110) of claim 1, wherein the seat receptacle comprises one or more seat mounting rails (117) extending along a transverse direction or longitudinal direction of a plane defined by the top of the main body (111).

4. An aircraft passenger seat system (100), comprising:
one or more aircraft passenger seat platforms (110) of one of claims 1 to 3;
one or more passenger seatings (121) mounted to a seat receptacle (116, 117) of the aircraft passenger seat platform; and
one or more passenger seat backrests (122) corresponding to the one or more passenger seatings (121) and mounted to a seat receptacle (116, 117) of the aircraft passenger seat platform.

5. An method of installing an aircraft passenger seat system (100), comprising:
providing (305) one or more aircraft passenger seat platforms (110) of one of claims 1 to 3;
adjusting (310) the plurality of body mounts (113, 114) of the one or more aircraft passenger seat platforms (110) to correspond to a plurality of seat rails (101);
mounting (315) the one or more aircraft passenger seat platforms (110) to the plurality of seat rails (101); and
mounting (320) one or more passenger seats (120) to the seat receptacles (116, 117) at the top of the main body (111) of the aircraft passenger seat platform.

6. The method of claim 5, wherein mounting one or more passenger seats comprises mounting (321) one or more passenger seatings (121) to the seat receptacles (116, 117), and mounting (322) one or more passenger seat backrests (122) to the seat receptacles (116, 117).

7. The method of claim 5 or 6, further comprising:
dismounting (325) the one or more passenger seats (120) from the aircraft passenger seat platform (110), wherein the one or more passenger seats (120) are of a first type; and
mounting (320) one or more passenger seats (120) of a second type to the seat receptacles (116, 117), wherein the second type is different from the first type,
wherein, preferably, the first type is an economy class passenger seat, and the second type is a business class passenger seat or a stretcher for transporting a lying person.

8. An aircraft (1), comprising:
a plurality of aircraft passenger seat platforms (110) of one of claims 1 to 3; or
a plurality of aircraft passenger seat systems (100) of claim 4.

9. The aircraft (1) of claim 8, wherein the main body (111) of at least one of the plurality of aircraft passenger seat platforms (110) has a box-like shape with an opening (112) facing rearward in the longitudinal direction of the aircraft (1).
